# EUROPÄISCHE PATENTSCHRIFT

(11) **EP 2 686 658 B1**
(45) Veröffentlichungstag und Bekanntmachung des Hinweises auf die Patenterteilung: **19.11.2014**
(21) Anmeldenummer: 12724897.9
(22) Anmeldetag: 15.05.2012
(51) Int. Cl.: G01M 3/32

(54) **VERFAHREN UND VORRICHTUNG ZUR PRÜFUNG FLEXIBLER BEHÄLTER**
METHOD AND DEVICE FOR INSPECTING FLEXIBLE CONTAINERS
PROCÉDÉ ET DISPOSITIF DE CONTRÔLE DE CONTENANTS FLEXIBLES

(30) Priorität: 30.06.2011 DE 102011106164
(43) Veröffentlichungstag der Anmeldung: 22.01.2014
(73) Patentinhaber: Sartorius Stedim Biotech GmbH, 37079 Göttingen (DE)
(72) Erfinder: DAHLBERG, Martin, 37120 Bovenden (DE); BÖTTCHER, Lars, 34212 Melsungen (DE); REGEN, Thomas, 37079 Göttingen (DE); OBERMANN, Stefan, 37139 Adelebsen (DE); HOGREVE, Marc, 37139 Adelebsen (DE)
(74) Vertreter: Müller-Boré & Partner Patentanwälte PartG mbB
(86) Internationale Anmeldenummer: PCT/EP2012/002088
(87) Internationale Veröffentlichungsnummer: WO 2013/000526

(56) Entgegenhaltungen:
- DE-A1- 10 129 481
- DE-U1-202005 008 846

## Beschreibung

Die vorliegende Beschreibung betrifft ein Verfahren und eine Vorrichtung zum zerstörungsfreien Prüfen der Integrität von flexiblen Behältern, insbesondere von Bioreaktorbehältern.

In der pharmazeutischen und biotechnologischen Industrie werden flexible Behälter, wie zum Beispiel Beutel, als Bioreaktorbehälter für die Prozeßführung bzw. Lagerung verwendet. Die Behälter können vor der eigentlichen Verwendung durch den Herstellungsprozeß, Transport oder Handhabung beschädigt werden. Es empfiehlt sich daher, vor der eigentlichen Verwendung einen Integritätstest des Behälters durchzuführen.

Gängige Testmethoden zur Integritätsprüfung des Behälters sind die Druckabfallmethode, die Durchflußmessung und Spurengasanalyse unter Verwendung eines Testgases. Allen Testmethoden gemein ist, dass zwischen dem Innenraum des Behälters und einer den Behälter aufnehmenden Testvorrichtung bzw. der Umgebung des Behälters ein Differenzdruck erzeugt wird. Dazu wird nach dem Herstellen bzw. vor und/oder nach der Benutzung der zu prüfende Behälter in eine Testvorrichtung zum Prüfen der Integrität angeordnet, welches in der Regel zwei voneinander beabstandete Platten aufweist, zwischen die der flexible Behälter angeordnet wird. Die Platten verhindern ein unkontrolliertes Expandieren des flexiblen Behälters während der Prüfung. Vielmehr kann sich der Behälter nicht über ein durch die Platten vorbestimmtes Volumen ausdehnen. Es versteht sich, dass die Platten entsprechend der Größe des Behälters dimensioniert sein müssen, damit der Behälter auch während der Prüfung vollständig zwischen den Platten verbleibt.

Die Druckschrift DE 20 2005 008 846 U1 offenbart eine Schlauchlegevorrichtung zum Aufwickeln und Prüfen von Feuerwehrschläuchen.

Es ist eine Aufgabe der Erfindung ein Verfahren und eine Vorrichtung zum Prüfen der Integrität von flexiblen Behältern bereitzustellen, welche(s) eine verbesserte Integritätsprüfung des Behälters erlaubt.

Die Aufgabe wird durch ein Verfahren gemäß Anspruch 1 und durch eine Vorrichtung gemäß Anspruch 4 gelöst. Bevorzugte Ausführungsformen sind Gegenstand der abhängigen Ansprüche.

### Verfahren zum Prüfen der Integrität eines flexiblen Behälters gemäß einem Aspekt

Ein Aspekt betrifft ein Verfahren zur Prüfung eines flexiblen Behälters umfassend die Schritte:
- Anordnen des flexiblen Behälters an einen Wickelkern, welcher um eine Wickelachse W drehbar ist und ein inneres Widerlager ausbildet, wobei ein Beabstandungsmittel, welches als ein aufwickelbares Blatt ausgebildet ist, mit einer Breitenerstreckung X parallel zur Wickelachse W an dem Wickelkern befestigt ist;
- Aufwickeln des Beabstandungsmittels gemeinsam mit dem flexiblen Behälter um die Wickelachse W;
- Anordnen eines äußeren Widerlagers um den aufgewickelten Behälter;
- Verbinden zumindest einer Behälteröffnung des Behälters mit einer Fluidquelle;
- Füllen des Behälters mit einem Fluid aus der Fluidquelle, um zu einem ersten Zeitpunkt T₁ einen vorbestimmten Überdruck P₁ in dem flexiblen Behälter zu erzeugen;
- Bestimmen, ob der Behälter hinreichend dicht ist.

Vorteilhafterweise können gemäß des obigen Verfahrens auch große, flexible Behälter mir einem Fassungsvermögen von mehr als etwa 100 Litern oder mehr als etwa 1000 Litern platzsparend geprüft werden, da ein auf dem Wickelkern aufgewickelter flexibler Behälter weniger Platz benötigt als ein flach ausgebreiteter flexibler Behälter. Weiter vorteilhafterweise können die mechanischen Belastbarkeiten des inneren und äußeren Widerlagers geringer ausgelegt werden, als die Belastbarkeiten von ebenen Widerlagern, die für eine Prüfung eines flach ausgebreiteten flexiblen Behälters notwendig wären.

Zur Prüfung des flexiblen Behälters wird der Behälter mit einem Fluid, insbesondere einem Gas wie beispielsweise sterile Luft, gefüllt bis zum ersten Zeitpunkt T₁ der vorbestimmte Überdruck P₁ erreicht ist. Der Überdruck gegenüber der Atmosphäre kann beispielsweise zwischen etwa 5 kPa (50 mbar) und etwa 50 kPa (500 mbar) liegen. Damit sich der volumenvariable flexible Behälter nicht unkontrolliert ausdehnen kann, wird der Behälter durch das innere und äußere Widerlager in seiner Ausdehnung gehemmt. Dementsprechend übt der flexible Behälter einen Druck auf das innere bzw. das äußere Widerlager bis etwa 50 kN/m² aus, was einer Belastung mit einer Masse von etwa 5t pro Quadratmeter entspricht.

Bevorzugt ist der flexible Behälter in zwei, drei, vier, fünf oder mehr Lagen um den Wickelkern aufgewickelt. Vorteilhafterweise sind die Lagen des flexiblen Behälters dadurch derart angeordnet, dass der durch einen Wandungsbereich einer ersten Lage des flexiblen Behälters nach dem Füllen mit einem Fluid ausgeübte Druck einem gleichgroßen aber entgegengesetzt wirkenden Druck eines Wandungsbereichs einer zweiten Lage des flexiblen Behälters entgegenwirkt, so dass die resultierende wirkende Kraft dieser beiden Wandungsbereiche gleich null ist. Dadurch wirkt lediglich eine Kraft auf das innere Widerlager proportional zu der mit dem inneren Widerlager kontaktierenden Fläche des flexiblen Behälters. Analog wirkt lediglich eine Kraft auf das äußere Widerlager proportional zu der mit dem äußeren Widerlager kontaktierenden Fläche des flexiblen Behälters. Daher sind die auf die Widerlager wirkenden Kräfte durch das Aufwickeln des flexiblen Behälters vorteilhafterweise geringer als dies bei einer Prüfung in einer flach ausgebreiteten Konfiguration möglich ist.

Das Anordnen des flexiblen Behälters an den Wickelkern kann insbesondere auch ein Befestigen des flexiblen Behälters umfassen. Die Befestigung kann mit einem geeigneten Befestigungsmittel erfolgen, welches die Wandung des flexiblen Behälters nicht schädigt bzw. perforiert. Zum Beispiel kann eine Kante des flexiblen Behälters mittels einer Klemmvorrichtung an den Wickelkern geklemmt werden. Weiter können starre Teile des flexiblen Behälters, wie beispielsweise Anschlüsse bzw. Verbinder an der zumindest einen Behälteröffnung an dem Wickelkern befestigt werden. Anschließend kann der flexible Behälter durch ein Drehen des Wickelkerns um die Wickelachse W aufgewickelt werden.

Das Anordnen des äußeren Widerlagers um den aufgewickelten Behälter kann insbesondere dadurch erfolgen, dass der durch das Aufwickeln entstandene Wickel in eine Hülse bzw. ein Rohr eingeführt wird, so dass sich der aufgewickelte flexible Behälter durch das Füllen mit dem Fluid in seiner Ausdehnung in einer radialen von der Wickelachse W ausgehenden Richtung nur begrenzt ausdehnen kann. Bevorzugt kann das äußere Widerlager auch durch ein Wickeln einer weiteren Lage eines Materials ausgebildet werden. Beispielsweise kann eine Lage eines reißfesten Materials, beispielsweise eines Textils, einer Kunststoffolie oder ähnliches, um den Wickel mit dem flexiblen Behälter aufgewickelt und befestigt sein.

Die zumindest eine Behälteröffnung des Behälters wird mit einer Fluidquelle fluidisch verbunden. Dabei kann das Verbinden insbesondere vor dem Aufwickeln des flexiblen Behälters erfolgen, beispielsweise wenn der flexible Behälter im Bereich des Wickelkerns eine Behälteröffnung aufweist, welche mit der Fluidquelle verbunden ist, beispielsweise mittels einer im Wickelkern angeordneten Fluidleitung. Das Verbinden kann insbesondere auch nach dem Aufwickeln des flexiblen Behälters erfolgen, beispielsweise wenn der flexible Behälter mit der Fluidquelle durch eine Fluidleitung verbunden ist, welche an einem Teil des flexiblen Behälters angeordnet ist, der zuletzt aufgewickelt wurde. Dabei kann die Fluidleitung beispielsweise durch eine Öffnung in dem äußeren Widerlager durchgeführt sein. Das Füllen des Behälters erfolgt dann mit einem Fluid aus der Fluidquelle, beispielsweise mit Luft bzw. steriler Luft oder einem anderen Gas und/oder einer Flüssigkeit. Das Füllen erfolgt solange, bis zu einem ersten Zeitpunkt T₁ ein vorbestimmter Überdruck P₁ in dem flexiblen Behälter erreicht ist.

Anschließend wird bestimmt bzw. diskriminiert, ob der Behälter hinreichend dicht ist. Dabei kann das Diskriminieren insbesondere anhand einer Druckdifferenz (P₂-P₁) zwischen einem Überdruck P₂ zu einem späteren Zeitpunkt T₂ und dem bestimmten Überdruck zu Zeitpunkt T₁ erfolgen. Alternativ oder zusätzlich kann das Diskriminieren anhand einer Fluidmenge M erfolgen, welche nach dem Zeitpunkt T₁ dem Behälter zugeführt wurde, um den Überdruck P₁ konstant zu halten. Weiter alternativ oder zusätzlich kann das Diskriminieren anhand einer Detektion von Fluidstoffen bzw. Fluidpartikeln außerhalb des Behälters erfolgen, welche dem Behälter zugeführt wurden. Vorteilhafterweise kann die Genauigkeit des Diskriminierens bzw. des Bestimmens, ob der Behälter dicht ist, erhöht werden, wenn zwei oder drei der oben beschriebenen Größen erfaßt werden. Die Wahrscheinlichkeit, dass die Dichtigkeit des Behälters falsch klassifiziert bzw. bestimmt wird sinkt dadurch vorteilhafterweise.

Eine Integritäts- bzw. Dichtigkeitsprüfung gibt Auskunft über die Integrität bzw. Dichtigkeit des Behälters, insbesondere ob Fluide aus einem Leck austreten oder eindringen können. Insbesondere ist die Integrität verletzt und der Behälter unbrauchbar, wenn Mikroorganismen durch ein Leck in das Innere des Behälters eindringen können, wodurch die Reaktion innerhalb des Behälters beeinträchtigt und die entstandenen Produkte unbrauchbar sind.

Der Begriff "flexibel" umfaßt im Sinne der Anmeldung eine plastische sowie eine elastische Verformbarkeit. Der Begriff "Fluid" umfaßt sowohl eine gasförmige Phase, eine flüssige Phase als auch ein Gemisch aus flüssiger und gasförmiger Phase eines Stoffes.

Vorzugsweise ist bei der Durchführung des Verfahrens an dem inneren Widerlager und/oder an dem äußeren Widerlager eine zumindest bereichsweise fluiddurchlässige und/oder strukturierte Aufnahmeschicht angeordnet. Zwischen den aufgewickelten Lagen des flexiblen Behälters ist ein zumindest bereichsweise fluiddurchlässiges und/oder strukturiertes Beabstandungsmittel angeordnet.

Dabei kann die Aufnahmeschicht integral mit dem inneren Widerlager bzw. dem äußeren Widerlager ausgebildet sein. Alternativ kann die Aufnahmeschicht lösbar an dem inneren Widerlager bzw. dem äußeren Widerlager befestigt sein. Das Beabstandungsmittel ist zumindest bereichsweise zwischen jeder der einzelnen Lagen des flexiblen Behälters angeordnet, wenn der flexible Behälter aufgewickelt ist. Insbesondere wird verhindert, dass sich zwei Lagen des aufgewickelten flexiblen Behälters einander kontaktieren. Das Beabstandungsmittel kann bevorzugt eine Schicht sein, welche mit dem flexiblen Behälter zusammen aufgewickelt wird und insbesondere aus dem gleichen Material besteht, wie die Aufnahmeschicht.

Die Wandung des flexiblen Behälters kann sich zumindest bereichsweise an die Aufnahmeschicht bzw. an das Beabstandungsmittel anschmiegen, insbesondere wenn der flexible Behälter mit einem Fluid unter einem vorbestimmten Druck P₁ gefüllt ist. Vorteilhafterweise verhindert die Aufnahmeschicht bzw. das Beabstandungsmittel aufgrund der Fluiddurchlässigkeit bzw. aufgrund der Strukturierung, dass ein gegebenenfalls vorhandenes Leck in der Wandung des flexiblen Behälters durch das innere bzw. äußere Widerlager bzw. durch einen Teil der Wandung einer benachbarten Lage des aufgewickelten flexiblen Behälters abgedichtet bzw. verschlossen wird. Dadurch wird vorteilhafterweise die Zuverlässigkeit der Integritäts- bzw. Dichtigkeitsprüfung erhöht.

### Vorrichtung zum Prüfen der Integrität eines flexiblen Behälters gemäß einem Aspekt

Ein Aspekt betrifft eine Vorrichtung zur Prüfung eines flexiblen Behälters umfassend:
- einen Wickelkern, welcher um eine Wickelachse W drehbar ist und ein inneres Widerlager ausbildet, wobei ein flexibler Behälter an dem Wickelkern befestigbar und um die Wickelachse W aufwickelbar ist;
- eine Fluidzufuhr, mit welcher zumindest eine Behälteröffnung des flexiblen Behälters fluidisch verbindbar ist;
- ein äußeres Widerlager, welches um den aufgewickelten Behälter anordenbar ist, und
- ein Beabstandungsmittel, welches gemeinsam mit dem flexiblen Behälter um die Wickelachse W aufwickelbar ist, wobei das Beabstandungsmittel als ein aufwickelbares Blatt ausgebildet ist, welches mit einer Breitenerstreckung X parallel zur Wickelachse W an dem Wickelkern befestigt ist.

Der Wickelkern kann dabei als starre Welle oder starre Hohlwelle ausgebildet sein. Bevorzugt umfaßt der Wickelkern Befestigungsmittel, welche geeignet sind den flexiblen Behälter an dem Wickelkern zu fixieren ohne den Behälter zu schädigen bzw. zu perforieren. Zum Beispiel können die Befestigungsmittel eine Klemmvorrichtung umfassen, womit der Behälter an den Wickelkern geklemmt werden kann. Weiter können das Befestigungsmittel eine Aufnahme, insbesondere Ausnehmungen in dem Wickelkern, aufweisen, in oder durch welche starre Teile des flexiblen Behälters eingeführt bzw. durchgeführt werden können. In diesem Fall ist es bevorzugt, wenn die Fluidzufuhr an bzw. in dem Wickelkern angeordnet ist. Beispielsweise kann eine Fluidleitung innerhalb eines als Hohlwelle ausgeführten Wickelkerns angeordnet sein, wobei die zumindest eine Behälteröffnung vor dem Aufwickeln des Behälters mit der Fluidzufuhr bzw. der Fluidleitung fluidisch verbunden werden kann. Nach dem Verbinden kann der flexible Behälter durch ein Drehen des Wickelkerns um die Wickelachse W aufgewickelt werden.

Das äußere Widerlager ist an bzw. um den auf dem Wickelkern aufgewickelten flexiblen Behälter anordenbar. Bevorzugt kann das äußere Widerlager als Rohr oder Hülse, z.B. aus zwei gegeneinander abgedichteten Halbschalen geformt, ausgebildet sein, in welche der aus dem Wickelkern und dem aufgewickelten flexiblen Behälter ausgebildete Wickel einführbar ist. Um als Widerlager zu fungieren, ist der nach dem Einführen des Wickels zwischen dem Wickel und dem Rohr bzw. der Hülse bestehende Spalt nicht größer, als sich der flexible Behälter durch das Zuführen von Fluid ausdehnt. Der aufgewickelte flexible Behälter ist dann in seiner Ausdehnung in von der Wickelachse W radial ausgehenden Richtung nur begrenzt ausdehnbar. Insbesondere ist der Spalt kleiner als etwa 5 cm und bevorzugt kleiner als etwa 1 cm, wobei die Größe des Spaltes abhängig ist von der Länge des flexiblen Behälters.

Weiter bevorzugt kann das äußere Widerlager auch durch ein Wickeln einer weiteren Lage eines Materials ausgebildet werden. Beispielsweise kann eine Lage eines reißfesten Materials, beispielsweise eines Textils, einer Kunststoffolie, ein aus starren Lamellen bestehendes flexibles Blatt oder ähnliches, um den Wickel mit dem flexiblen Behälter aufgewickelt und befestigt sein.

Die Vorrichtung ein Beabstandungsmittel, welches an dem Wickelkern angeordnet ist und gemeinsam mit dem flexiblen Behälter um die Wickelachse W aufwickelbar ist. Durch das Beabstandungsmittel wird der unmittelbare Kontakt zwischen den einzelnen Lagen des aufgewickelten flexiblen Behälters vermieden, wodurch vorteilhafterweise verhindert wird, dass ein Leck in einer ersten Lage des aufgewickelten Behälters durch die Wandung einer zweiten Lage des Behälters abgedichtet wird, wenn beide Lagen einander kontaktieren und durch den Druck, der während des Prüfens in dem flexiblen Behälter herrscht, gegeneinander gepreßt werden. Weiterhin kann das Beabstandungsmittel ein Gleiten der Wandung des flexiblen Behälters beim Füllen mit dem Fluid erlauben, wodurch sich der flexible Behälter innerhalb des Wickels setzen kann und alle Bereiche des flexiblen Behälters gleichmäßig mit Fluid gefüllt werden. Dies ist dann besonders vorteilhaft, wenn der flexible Behälter eine Wandung aus einem haftenden Material aufweist. Durch das Beabstandungsmittel kann also vorteilhafterweise erreicht werden, dass die Integritäts- bzw. Dichtigkeitsprüfung des flexiblen Behälters mit verbesserter Genauigkeit und geringerer Fehlerquote durchgeführt werden kann.

Das Beabstandungsmittel ist als ein aufwickelbares Blatt ausgebildet, welches mit einer Breitenerstreckung X parallel zur Wickelachse W an dem Wickelkern befestigt ist. Das Blatt kann dabei bevorzugt eine Vielzahl von starren Lamellen umfassen, welche sich jeweils entlang der Breitenerstreckung X erstrecken und gelenkig miteinander verbunden sind. Die starren Lamellen weisen insbesondere eine hohe mechanische Stabilität auf, und können den Kräften, die beim Füllen des flexiblen Behälters im aufgewickelten Zustand erzeugt werden, standhalten.

Vorzugsweise ist das Blatt zumindest bereichsweise fluiddurchlässig und/oder mit einer strukturierten Oberfläche ausgebildet. Mit anderen Worten können beispielsweise die Lamellen aus einem Material ausgebildet sein, welches fluiddurchlässig ist, beispielsweise aus einem porösen Material. Alternativ oder zusätzlich können die Lamellen eine strukturiert sein bzw. eine strukturierte Oberfläche aufweisen.

Weiter bevorzugt kann das Beabstandungsmittel auch eine flexible oder starre Aufnahmeschicht umfassen, welche derart an dem Wickelkern befestigbar bzw. befestigt ist, dass sich die Aufnahmeschicht im Wechsel mit den Lagen des flexiblen Behälters aufwickelt, wenn der Wickelkern um die Wickelachse gedreht wird. Die Aufnahmeschicht ist fluiddurchlässig und/oder strukturiert. Die Aufnahmeschicht nimmt den von dem gefüllten flexiblen Behälter erzeugten Druck auf und leitet diesen Druck in das innere bzw. das äußere Widerlager ein. Weiterhin überträgt die Aufnahmeschicht den Druck zwischen den einzelnen aufgewickelten Lagen des flexiblen Behälters. Fluide, die durch die Wandung des mit dem Fluid gefüllten flexiblen Behälters durch ein Leck entweichen, werden ebenfalls durch die Aufnahmeschicht aufgenommen. Beispielsweise gelangt das entwichene Fluid in den Porenraum der Aufnahmeschicht und/oder in Kanäle, welche durch die strukturierte Aufnahmeschicht und der Wandung des flexiblen Behälters ausgebildet werden. Durch diese Kanäle bzw. durch den Porenraum kann das entwichene Fluid fließen und in die Umgebung gelangen. Insbesondere ist die Oberfläche der Aufnahmeschicht strukturiert, welche bei Durchführung des Verfahrens mit der Wandung des flexiblen Behälters kontaktiert.

Bevorzugt ist das Beabstandungsmittel vollständig als Aufnahmeschicht ausgebildet oder mit der Aufnahmeschicht bedeckt. Bevorzugt können auch die Lamellen vollständig oder teilweise mit der Aufnahmeschicht versehen bzw. bedeckt sein. Weiter bevorzugt können auch das innere Widerlager und/oder das äußere Widerlager vollständig oder teilweise mit der Aufnahmeschicht versehen bzw. bedeckt sein. Alternativ können die Lamellen und/oder das innere Widerlager und/oder das äußere Widerlager selbst die Eigenschaften der Aufnahmeschicht bezüglich Fluiddurchlässigkeit, Porosität und Struktur der Oberfläche aufweisen. Die Aufnahmeschicht ist bevorzugt austauschbar an dem Wickelkern bzw. an dem Beabstandungsmittel angeordnet bzw. befestigt, so dass die Aufnahmeschicht leicht ersetzt werden kann, falls diese verschmutzt ist.

Vorteilhafterweise kann der flexible Behälter an den Widerlagern mittelbar über die Aufnahmeschicht anliegen, wobei das Ergebnis des Integritätstests nicht durch das Anliegen beeinflußt wird, da das Abdichten von vorhandenen Lecks des Behälters durch die Aufnahmeschicht vermieden wird. Dadurch ist vorteilhafterweise eine verbesserte Integritätsprüfung möglich, durch welche Lecks des Behälters mit größerer Sicherheit bestimmt werden können, da vermieden wird, während der Integritätsprüfung ein Leck unbeabsichtigt zu verschließen.

Die Aufnahmeschicht ist vorzugsweise porös bzw. umfaßt ein poröses Material, wobei die Porenvolumen zweckmäßigerweise untereinander derart verbunden sind, das die Aufnahmeschicht fluiddurchlässig ist. Weiter bevorzugt kann die fluiddurchlässige Aufnahmeschicht eine richtungsabhängige bzw. anisotrope Fluiddurchlässigkeit aufweisen. Beispielsweise kann die fluidische Leitfähigkeit der Aufnahmeschicht in einer Richtung parallel zu einer Normalen der Aufnahmeschichtoberfläche größer sein als in einer Richtung senkrecht zur dieser Normalen, also parallel zur Erstreckung der Aufnahmeschichtoberfläche.

Vorzugsweise umfaßt die fluiddurchlässige Aufnahmeschicht ein gewebtes Textil, ein nicht gewebtes Textil und/oder einen Schaumstoff. Als bevorzugte Materialien für die Aufnahmeschicht können Vliesstoffe, wie beispielsweise Spinnvliese aus Polypropylen verwendet werden. Insbesondere für die Verwendung in Reinsträumen kann die Aufnahmeschicht aus einem fusselfreien bzw. nicht staubenden Material bestehen, welches keine Partikel in die Umgebung abgibt. Ein beispielhaftes Vlies ist zum Beispiel Novatexx 2019 Viledon von der Firma Freudenberg Filtratation Technologies KG aus Polypropylen mit einem Gewicht von 17-100 g/m² und einer Luftdurchlässigkeit von 1000-5000 l/m²s bei einer Druckdifferenz von 1 bar mit einer Materialdicke von 0,25-0,75 mm. Ein weiteres beispielhaftes Material ist unter den Handelsnamen Porex® XS49020-XS49100 von der Firma Porex Technologies GmbH erhältlich. Das Material besteht aus Polypropylen und Polyethylen mit einer Materialdicke von etwa 1,5 mm bis etwa 5 mm, bevorzugt größer als etwa 3 mm. Die Größe der Poren liegt im Bereich von etwa 20 µm bis etwa 175 µm, bevorzugt kleiner als etwa 120µm. Die Luftdurchlässigkeit liegt bei etwa 150 bis etwa 300 l/cm²min bei 1,2 inch Wassersäule. Es hat sich als vorteilhaft erwiesen, für die fluiddurchlässige Außenschicht ein Polymermaterial zu verwenden, welches wärmeleitende Zusätze, wie beispielsweise Bornitrit, enthält. Dadurch läßt sich eine Temperierung des Bioreaktorbehälters vorteilhafterweise verbessern.

Die Aufnahmeschicht kann alternativ oder zusätzlich strukturiert sein. Eine strukturierte Aufnahmeschicht im Sinne der Anmeldung bedeutet, dass zumindest die Oberfläche der Aufnahmeschicht, welche bei bestimmungsgemäßem Gebrauch mit dem Behälter kontaktiert, nicht glatt ist, sondern eine Struktur bzw. ein Relief aufweist. Insbesondere kann die Struktur durch Erhebungen und Vertiefungen ausgebildet werden, welche durch einen Wechsel der Materialstärke der Aufnahmeschicht erzeugt werden. Das heißt, die Aufnahmeschicht weist im Bereich von Erhebungen eine größere Materialstärke auf als im Bereich von Vertiefungen. Alternativ kann die Materialstärke der Aufnahmeschicht im Wesentlichen konstant sein, wobei die Struktur in das Material geformt ist. Dabei ist insbesondere der flexibel ausgebildete Bereich der Wandung mit einer strukturierten Aufnahmeschicht versehen. Bevorzugt können aber auch starre Bereiche der Wandung einer strukturierte Aufnahmeschicht aufweisen.

Die strukturierte Aufnahmeschicht kann fluidundurchlässig sein. Die strukturierte Aufnahmeschicht führt zu einem äquivalenten technischen Effekt wie eine fluiddurchlässige Aufnahmeschicht in dem Sinne, dass ein Leck in der Wandung des Behälters während der Integritätsprüfung nicht von außen abgedichtet werden kann. Aufgrund der Struktur der Aufnahmeschicht kann die Wandung des Behälters in der Regel nicht mit der Aufnahmeschicht derart fluiddicht abschließen, dass ein aus dem Behälter austretendes Fluid nicht in die Umgebung gelangen würde. Insbesondere kann ein solches Abdichten nicht mittels der inneren und äußeren Widerlager bzw. den benachbarten Lagen des aufgewickelten flexiblen Behälters erfolgen. Demzufolge kann ein Integritätstest durch Beaufschlagen des Behälters mit einem Überdruck erfolgen, wobei aufgrund des Lecks ein Druckabfall oder ein Fluidfluß feststellbar ist, welcher auf ein Leck schließen läßt.

Bei der Durchführung eines Integritätstest des aufgewickelten Behälters mit der oben beschriebenen Vorrichtung wird die Wandung des Behälters insbesondere gegen die strukturierte Aufnahmeschicht des Beabstandungsmittels bzw. der Widerlager gepreßt. Die Struktur der Aufnahmeschicht führt dazu, dass fluidleitende Kanäle zwischen dem Behälter einerseits und dem Beabstandungsmittel und den Widerlagern andererseits ausgebildet werden. Dadurch kann ein durch ein Leck austretendes Fluid über die fluidleitenden Kanäle in die Umgebung geleitet werden, so dass das Leck in der Wandung des Behälters nicht durch Wandungen der Vorrichtung bzw. der benachbarten Lagen des aufgewickelten Behälters abdichtbar ist. Wie oben bereits beschrieben ist dadurch vorteilhafterweise eine verbesserte Integritätsprüfung möglich, durch welche Lecks in der Wandung des Behälters mit größerer Sicherheit bestimmt werden können, da vermieden wird während der Integritätsprüfung ein Leck unbeabsichtigt zu verschließen.

Vorzugsweise weisen die strukturierte Aufnahmeschicht bzw. die strukturierten Widerlager bzw. das strukturierte Beabstandungsmittel Vertiefungen auf, welche zumindest etwa 100 µm tief sind. Dabei definieren bzw. bilden zwei benachbarte Vertiefungen eine Erhebung. Ebenso definieren bzw. bilden zumindest zwei benachbarte Erhebungen eine Vertiefung. Weiter bevorzugt weisen die Vertiefungen gegenüber zu den benachbarten Erhebungen zumindest eine Tiefe von größer als etwa 150 µm, weiter bevorzugt von größer als etwa 250 µm und insbesondere von größer als etwa 500 µm auf. Dadurch wird das Ableiten des aus einem Leck austretenden Fluids in die Umgebung sichergestellt.

Vorzugsweise weisen die strukturierte Aufnahmeschicht bzw. die strukturierten Widerlager bzw. das strukturierte Beabstandungsmittel Erhebungen auf, welche höchstens etwa 200 µm breit sind. Weiter bevorzugt weisen die Erhebungen eine Breite von weniger als etwa 150 µm, weiter bevorzugt von weniger als etwa 100 µm und insbesondere von weniger als etwa 50 µm auf. Dadurch wird verhindert, dass eine Erhebung paßgenau auf einem Leck positionierbar ist und dadurch das Leck durch eine einzige Erhebung abgedichtet wird. Der erwartete Durchmesser eines Lecks beträgt etwa 5 µm bis etwa 1000 µm.

Vorzugsweise sind die Erhebungen und/oder Vertiefungen entlang einer Vorzugsrichtung V orientiert. Insbesondere erstrecken sich die Erhebungen und/oder Vertiefungen im Wesentlichen entlang einer Längsrichtung L, wobei benachbarte Erhebungen und/oder Vertiefungen parallel zueinander orientiert sind. Die Vorzugsrichtung V entspricht dabei der Längsrichtung L, entlang welcher sich die Erhebungen bzw. Vertiefungen erstrecken. Mit anderen Worten können die Erhebungen und Vertiefungen insbesondere eine Rillenstruktur oder eine Rautenstruktur auf der Aufnahmeschicht ausbilden.

Vorzugsweise greifen die Lamellen des als Blatt ausgeführten Beabstandungsmittels in eine zugeordnete Führungsnut der Vorrichtung ein. Weiter vorzugsweise sind Führungselemente an den Enden der Lamellen befestigt, wobei die Enden der Lamellen entlang der Breitenerstreckung X voneinander beabstandet sind. Die Führungselemente greifen jeweils in die zugeordnete Führungsnut ein. Durch das Eingreifen der Lamellen bzw. der Führungselemente in die zugeordneten Führungsnuten sind die Lamellen in einem vorbestimmten Abstand zueinander aufwickelbar. Insbesondere ist der Abstand zwischen den einzelnen Lagen der Lamellen konstant. Vorteilhafterweise ist der Raum zwischen den Lamellen, den der flexible Behälter beim Füllen mit dem Fluid einnehmen kann, vorbestimmt und bevorzugt über die gesamte Erstreckung des flexiblen Behälters konstant. Dadurch kann sich der flexible Behälter gleichmäßig ausdehnen, und die Druckverteilung und mechanische Beanspruchung der Wandung des Behälters ist im Wesentlichen an allen Stellen des Behälters konstant.

Vorzugsweise ist der Wickelkern mit einem Antrieb verbunden. Vorteilhafterweise kann der Wickelkern motorisch gedreht werden, so dass der flexible Behälter motorisch aufgewickelt und abgewickelt werden kann. Es versteht sich, dass das Aufwickeln und Abwickeln des flexiblen Behälter auch manuell erfolgen kann.

Vorzugsweise umfaßt die Vorrichtung weiter:
- eine Fluidquelle, welche mit der Fluidzufuhr fluidisch verbunden ist und/oder
- eine Prüfeinrichtung, durch welche diskriminierbar ist, ob der Behälter hinreichend dicht ist.

Die Prüfeinrichtung kann insbesondere ausgelegt sein, das Diskriminieren anhand einer Druckdifferenz (P₂-P₁) zwischen einem Überdruck P₂ zu einem späteren Zeitpunkt T₂ und dem bestimmten Überdruck zu Zeitpunkt T₁ durchzuführen. Alternativ oder zusätzlich kann die Prüfeinrichtung ausgelegt sein, das Diskriminieren anhand einer Fluidmenge M durchzuführen, welche nach dem Zeitpunkt T₁ dem Behälter zugeführt wurde, um den Überdruck P₁ konstant zu halten. Weiter alternativ oder zusätzlich kann die Prüfeinrichtung ausgelegt sein, das Diskriminieren anhand einer Detektion von Fluidstoffen bzw. Fluidpartikeln außerhalb des Behälters durchzuführen, welche dem Behälter zugeführt wurden. Vorteilhafterweise kann die Genauigkeit des Diskriminierens bzw. des Bestimmens, ob der Behälter dicht ist, erhöht werden, wenn zwei oder drei der oben beschriebenen Größen erfaßt werden. Die Wahrscheinlichkeit, dass die Dichtigkeit des Behälters falsch klassifiziert bzw. bestimmt wird, sinkt dadurch vorteilhafterweise. Die Prüfvorrichtung kann dazu mit zumindest einem Drucksensor und/oder zumindest einer Durchflußmeßeinrichtung und/oder zumindest einem Fluiddetektor verbunden sein.

Weiter bevorzugt kann die Fluidquelle und/oder der optionale Antrieb des Wickelkerns durch die Prüfvorrichtung gesteuert bzw. geregelt werden. Insbesondere kann die Fluidquelle und/oder der Antrieb Teil der Prüfvorrichtung sein. Bevorzugt kann zumindest einer des zumindest einen Drucksensors und/oder zumindest eine der zumindest einen Durchflußmeßeinrichtung und/oder zumindest einer des zumindest einen Fluiddetektors Teil der Prüfvorrichtung sein. Weiter bevorzugt umfaßt die Prüfvorrichtung einen Rechner, welcher ein Verfahren zum Prüfen der Integrität des flexiblen Behälter mittels der Prüfvorrichtung rechnergestützt bzw. automatisch durchführt.

### Figurenbeschreibung

Nachfolgend werden bevorzugte Ausführungsformen der vorliegenden Erfindung anhand der beigefügten Zeichnungen beispielhaft erläutert. Einzelne Merkmale der gezeigten bevorzugten Ausführungsformen können zu weiteren bevorzugten Ausführungsformen kombiniert werden. Es zeigen:
- Figur 1: einen Querschnitt durch eine Ausführungsform einer Vorrichtung zum Prüfen eines flexiblen Behälters;
- Figur 2: einen Längsschnitt durch die in Figur 1 gezeigte Ausführungsform;
- Figur 3: eine schematische Ansicht der in den Figuren 1 und 2 gezeigten Ausführungsform;
- Figur 4a: einen Querschnitt durch eine weitere Ausführungsform einer Vorrichtung zum Prüfen eines flexiblen Behälters in einem ersten Zustand;
- Figur 4b: einen Querschnitt durch die Ausführungsform in einem zweiten Zustand;
- Figur 5: einen Querschnitt durch eine weitere Ausführungsform einer Vorrichtung zum Prüfen eines flexiblen Behälters in einem ersten Zustand;
- Figuren 6a-d: Konfigurationen zur Durchführung einer Integritätsprüfung.

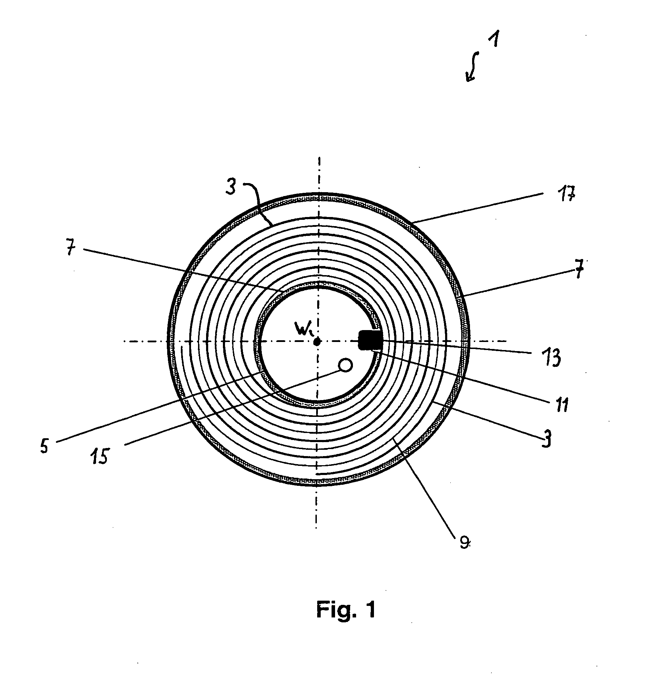

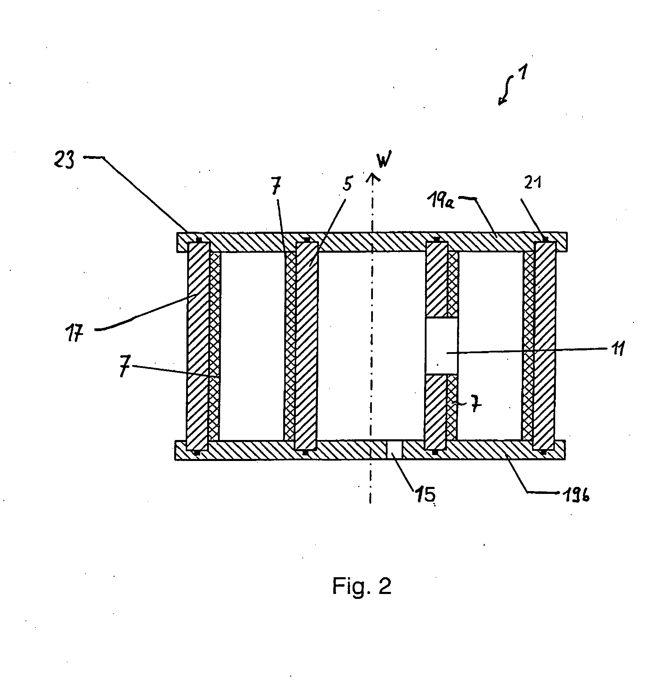

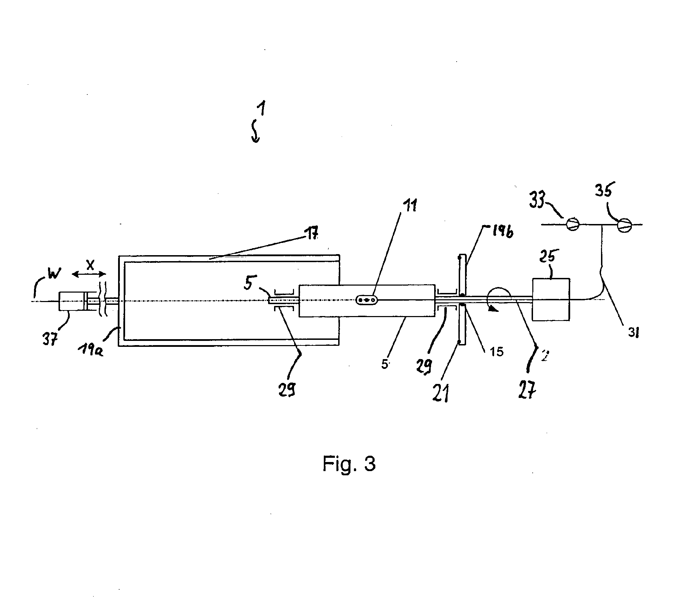

Die **Figur 1** zeigt eine bevorzugte Ausführungsform einer Vorrichtung 1 zum Prüfen eines flexiblen Behälters 3 einschließlich des flexiblen Behälters 3 in einem Querschnitt, und die **Figur 2** zeigt einen Längsschnitt durch die in Figur 1 gezeigte Ausführungsform jedoch ohne den angeordneten flexiblen Behälter 3. Die Figur 3 zeigt eine schematische Ansicht der in den Figuren 1 und 2 gezeigten Ausführungsform ohne den flexiblen Behälter 3.

Zur Durchführung des Verfahren mit der in den Figuren 1 bis 3 gezeigten Ausführungsform der Vorrichtung 1 wird der flexible Behälter 3 um einen zylindrischen Wickelkern 5, der als Hohlwelle bzw. Hohlkern ausgebildet ist, um eine Wickelachse W aufgewickelt. Figur 1 zeigt den flexiblen Behälter 3 in einem aufgewickelten Zustand. Der Wickelkern 5 ist mit einer Aufnahmeschicht 7 versehen, welche lösbar oder unlösbar mit dem Wickelkern 5 verbunden sein kann. Die Aufnahmeschicht 7 ist bevorzugt fluidleitend bzw. fluiddurchlässig ausgebildet. Insbesondere kann die Aufnahmeschicht 7 porös ausgebildet sein. Die Aufnahmeschicht 7 wirkt ebenfalls als Stützkörper, auf welchen der Behälter im fluidgefüllten Zustand einen Druck ausüben kann, wobei der Druck an den Wickelkern 5 weitergegeben wird. Mit anderen Worten wirkt der Wickelkern 5 als inneres Widerlager für den flexiblen Behälter.

Weiter ist ein Beabstandungsmittel 9 an dem Wickelkern 5 befestigt, wobei das Beabstandungsmittel 9 als Blatt 9 ausgebildet ist. Das Blatt kann entsprechend der Aufnahmeschicht 7 ein fluiddurchlässiges Material umfassen, welches zweckmäßigerweise zusammen mit dem flexiblen Behälter 3 auf den Wickelkern aufwickelbar ist. Mit anderen Worten muß das Beabstandungsmittel 9 dieser Ausführungsform aufwickelbar bzw. flexibel sein. Durch das Beabstandungsmittel 9 werden die einzelnen Lagen des aufgewickelten Behälters 3 voneinander beabstandet bzw. getrennt, so dass sich die Wandungen der einzelnen Lagen des Behälters 3 im Wesentlichen nicht kontaktieren.

Der Wickelkern 5 weist eine Durchführung 11 auf, durch welche ein Anschluss bzw. ein Verbinder 13 des flexiblen Behälters 3 zumindest teilweise geführt werden kann, um den Behälter 3 bzw. dessen Verbinder 13 mit einer Fluidzufuhr (nicht gezeigt) fluidisch zu verbinden. Die Fluidzufuhr kann beispielsweise eine Fluidleitung umfassen, welche mit einer Fluidquelle 33 (in Fig. 3 gezeigt) verbindbar ist. Um die Fluidleitung aus dem Inneren des Wickelkerns 5 herauszuführen, weist der Wickelkern 5 eine Fluidleitungsdurchführung 15 auf. Die Fluidleitungsdurchführung ist zweckmäßigerweise für eine Gasdetektion mit einer Dichtung versehen oder als abgedichtete Einschraubverbindung bzw. Gehäusedurchführung ausgeführt. Der Behälter 3 ist also vor dem Aufwickeln mit der Fluidzufuhr verbindbar. Die Zufuhr des Fluids bzw. eines flüssigen bzw. gasförmigen Prüfmediums erfolgt über den Verbinder 13. Eventuell vorhandene weitere Anschlüsse des Behälters 3 werden bevorzugt mit Blindstopfen und/oder Schlauchklemmen verschlossen. Der Verbinder 13 des Behälters 3 zur Zufuhr des Fluids liegt beim Aufwickeln des Behälters 3 entweder auf der Innenseite oder der Außenseite des Behälters 3; in der bevorzugten Ausführungsform jedoch auf der Innenseite des Behälters 3. Bevorzugt ist der Wickelkern 5a dazu ausgelegt, bereits an dem Behälter 3 montierte Anschlussleitungen, Steril-Konnektoren, Verzweigungen, Probennahme-Anschlüsse etc. aufzunehmen. In diesem Fall können die vorhandenen Leitungen auch zur Zufuhr des Fluids verwendet werden. Damit können auch die bereits montierten Komponenten in die Prüfung mit einbezogen werden.

Nach dem Aufwickeln wird der entstandene Wickel in ein Rohr 17 eingeführt, dessen Innenwandung ebenfalls mit einer fluiddurchlässigen Aufnahmeschicht 7 versehen ist. Das Rohr 17 wirkt in dieser Ausführungsform als äußeres Widerlager 17. Das Rohr 17 sowie der Wickelkern 5 können an den beiden Stirnseiten jeweils mechanisch über Deckelelemente 19a, 19b miteinander verbunden sein. Bevorzugt werden die Deckelelemente 19a, 19b mit dem Rohr 17 bzw. dem Wickelkern 5 durch Verwendung einer Dichtung 21 jeweils gasdicht verschlossen. Die Dichtung hält bevorzugt einem Überdruck von 2 bar oder einem Vakuum von 0 mbar stand. Das verschlossen Rohr 17 bildet eine Prüfkammer 23 aus.

Das Aufwickeln des Behälters 3 kann manuell erfolgen. Bevorzugt weist die Vorrichtung 1 jedoch einen (elektro-)motorischen Antrieb 25 auf, welcher den Wickelkern 5 über eine Antriebswelle 27 um die Wickelachse W drehen kann. Die Antriebswelle 27 ist mittels der Wellenlager 29 gelagert.

Während des Wickelvorganges ist es möglich, über die Zufuhrleitung 31 und der Fluidquelle 33 dem Behälter (in Fig. 3 nicht gezeigt) Fluid geregelt zuzuführen also entsprechend einen Überdruck in dem Behälter zu erzeugen. Alternativ kann über die Zufuhrleitung 31 Fluid aus dem Behälter geregelt abgeführt werden, um beispielsweise einen Unterdruck in dem Behälter zu erzeugen. Dazu wird das Fluid über die Fluidsenke 35 abgeführt. Die Fluidquelle 33 und die Fluidsenke 35 können als Fluidpumpen ausgebildet sein. Der Bereich für den absoluten Druck in dem Behälter kann zwischen etwa 0 mbar absolut und etwa 2000 mbar absolut, bevorzugt jedoch etwa 700 mbar absolut bis etwa 1600 mbar absolut liegen.

Die Vorrichtung erlaubt ein gleichmäßiges Füllen des Behälters 3 mit einem Fluid, das heißt, dass die Fluidschicht zwischen den beiden Wandungslagen des Behälters 3 durchgängig vorhanden ist und insbesondere das Aneinanderhaften der beiden Wandungslagen, beispielsweise durch Kohäsion des vorzugsweise die Wandungslagen ausbildenden Kunststoffs, vermieden wird. Weiter bevorzugt wird der Abstand zwischen dem Wickelkern 5 und dem Rohr 17, also zwischen innerem und äußerem Widerlager, minimal gewählt, so dass der aufgewickelte Behälter möglichst spaltfrei in das Rohr 17 einführbar ist. Vorteilhafterweise wird das Innenvolumen der Prüfkammer 23 reduziert, wodurch weiter vorteilhafterweise bei einer Differenzdruckmessung die zu messende Druckänderung maximiert wird, bei einer Durchflussmessung das Meßsignal mit der geringsten zeitlichen Verzögerung ansteht und bei Gaskonzentrationsmessung der Fluidverbrauch an Testgas am geringsten ist und eine Konzentrationsänderung im Nachweisvolumen der Prüfkammer am schnellsten erfolgt. Weiterhin wird vorteilhafterweise die Belastung auf den Behälter 3 minimiert, da das Aufweiten an den Schweißnähten verringert wird. Weiterhin vorteilhafterweise kann der Behälter 3 schneller über die Zufuhrleitung 31 nach Beenden des Prüfvorganges über die Fluidsenke 35 entleert werden, da das zu entleerende Volumen geringer ist.

Zum Wechseln des zu prüfenden Behälters kann die Vorrichtung 1 eine Verschiebeeinrichtung 37 aufweisen, welche den Wickelkern 5 entlang der Breitenerstreckung X des Wickelkerns bzw. entlang der Wickelachse W verschieben kann, um den Wickelkern in und aus dem Rohr 17 zu bewegen:

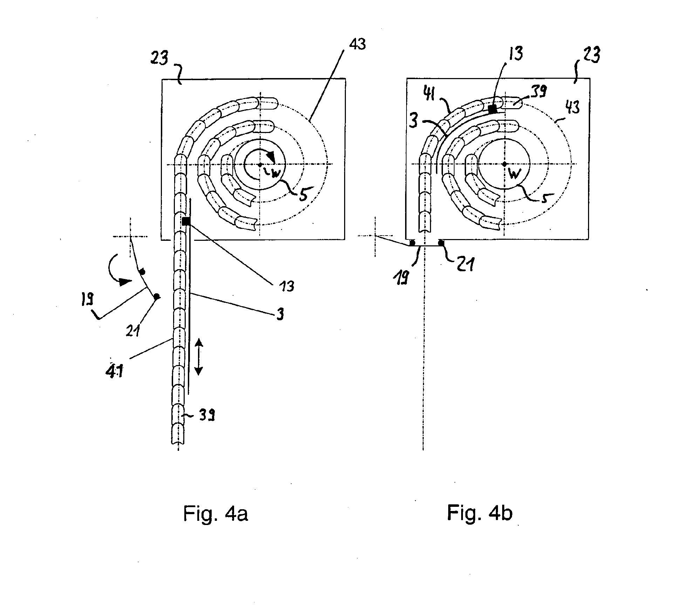

Die **Figur 4a** zeigt einen Querschnitt durch eine weitere Ausführungsform einer Vorrichtung zum Prüfen eines flexiblen Behälters in einem ersten, teilweise abgewickelten Zustand und die **Figur 4b** einen Querschnitt durch diese Ausführungsform in einem zweiten, vollständig aufgewickelten Zustand.

Um die Abstände zwischen den einzelnen Lagen des Behälters 3 und des Beabstandungsmittels 9 konstant zu halten, kann als bevorzugtes Beabstandungsmittel 9 ein Blatt 41 umfassend eine Vielzahl starrer Lamellen 39 vorgesehen sein, wobei die Lamellen 39 untereinander gelenkig verbunden sind. Bevorzugt sind die Lamellen 39 fluiddurchlässig oder mit strukturierter Oberfläche ausgebildet. Bevorzugt können die Lamellen 39 auch zumindest bereichsweise mit einer Aufnahmeschicht versehen sein. Das Blatt 41 ist an einem dafür geeigneten Wickelkern 5 befestigt.

Die Figur 4a zeigt das Blatt 41 in einem zumindest teilweise abgewickelten Zustand, so dass der Behälter 3 an dem Blatt 41 angeordnet bzw. befestigt werden kann. Das Blatt 41 ist insbesondere ausgelegt eine als Verbinder 13 ausgebildete Behälteröffnung aufzunehmen. Weiter bevorzugt ist die Dicke der Lamellen 39 ausgelegt alle vorhandene Anschlüsse des Behälter 3 aufzunehmen bzw. die Anschlüsse mit Fluidleitungen zu verbinden.

Durch Drehen des Wickelkerns 5 um die Wickelachse W werden die Lamellen 39 des Blattes 41 und der Behälter 3 spiralförmig aufgewickelt, wobei die einzelnen Lagen des Behälters 3 durch das Blatt getrennt sind. Bevorzugt sind die miteinander verbundene Lamellen 39 aus einem starren Material ausgebildet, bevorzugt mit einer fluiddurchlässigen bzw. porösen und/oder strukturierten Beschichtung, wobei das Material zusätzlich auch dazu geeignet ist, die entstehenden Kräfte bei einem Differenzdruck zwischen dem Behälter 3 und dem Innenraum der Prüfkammer 23 aufzunehmen.

Die einzelnen Lamellen 39 werden beim Aufwickeln beidseitig in einer spiralförmigen Nut 43 geführt, so dass sich über die gesamte Länge des Behälters 3 ein konstanter Abstand zwischen den Lagen des Blatts 41 und damit des Behälters 3 ergibt, um vorteilhafterweise eine gleichmäßige Ausdehnung des Behälters 3 durch das Füllen mit Fluid über die ganze Länge zu erreichen. Weiter vorteilhafterweise wird eine Faltenbildung während des Aufwickelns des flexiblen Behälters 3 durch die starren Lamellen 39 vermieden.

Die Länge des Blattes entlang der Aufwickelrichtung entspricht bevorzugt etwa der dreifachen Länge des längsten zu prüfenden Behälters 3, weiter bevorzugt der doppelten Länge des längsten Behälters 3. Die Prüfkammer 23 kann mittels eines Verschlusses 19 und einer Dichtung 21 fluiddicht verschließbar sein.

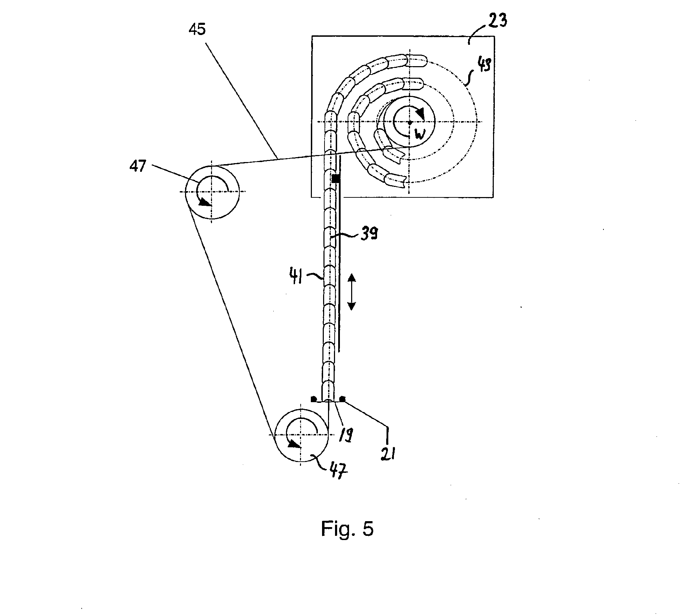

Bevorzugt kann das Blatt 41 bzw. die Lamellen 39 einen Seilzug 45 einschließlich Umlenkrollen 47 als Antrieb des Blatts 41 aufweisen (siehe Figur 5). Insbesondere kann der Seilzug 45 zum Spannen der verbundenen Lamellen 39 verwendet werden. Hierzu ist es möglich, das innerhalb der Prüfkammer 23 liegende Seil über Umlenkrollen 47 nach außen zu führen. Dadurch muß lediglich ein Seil 45 verwendet werden. Bevorzugt ist ein innenliegendes und ein außenliegendes Seil vorgesehen, um Undichtigkeiten der Prüfkammer 23 an den Seildurchführungen zu vermeiden.

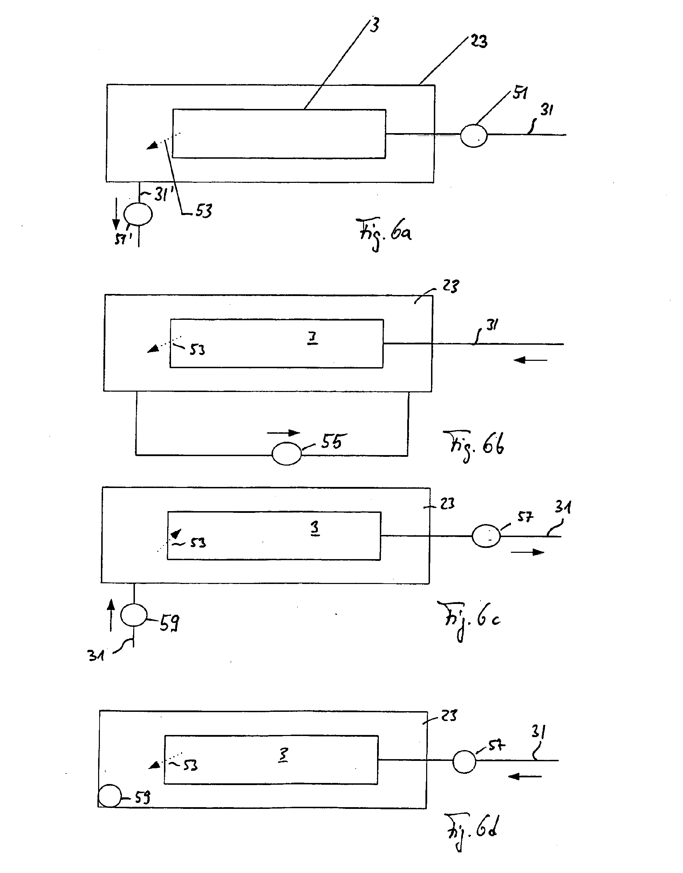

Die Figuren 6a bis 6d zeigen verschiedene Konfigurationen zur Durchführung einer Integritätsprüfung. Zum Durchführen der Integritätsprüfung bzw. der Prüfung auf Dichtheit, können folgende Anschlüsse bzw. Sensoren vorgesehen sein. Für eine Durchflussmessung, wie in **Figur 6a** gezeigt, kann die Fluidleitung 31 mit einer Durchflußmeßeinrichtung 51 versehen sein. Bevorzugt kann der zu prüfende Behälter 3 mit einer Fluidleitung 31 als Zufluß und einer anderen Fluidleitung 31' als Abfluß verbunden sein, wobei dann zwei Durchflußmeßeinrichtungen 51, 51', jeweils eine im Zufluss und ein im Abfluss, vorgesehen sein können, um eine Leckage 53 zu detektieren. Für eine Gaskonzentrationsmessung, wie in **Figur 6b** gezeigt, kann ein Fluiddetektor bzw. ein Gassensor 55 mit dem Innenvolumen der Prüfkammer 23 verbunden sein, um eine Leckage 53 zu detektieren. Zweckmäßigerweise ist vor dem Gassensor 55 eine Zirkulationspumpe (nicht gezeigt) angeordnet, die ein Durchmischen der Gase im Innenvolumen bewirkt und ein zu detektierendes Gas schneller dem Gassensor 55 zuführt. Für eine Differenzdruckmessung, wie in **Figuren 6c und 6d** gezeigt, kann ein Drucksensor 57 mit dem Inneren des Behälters verbunden sein, bevorzugt über die Fluidleitung 31. Alternativ oder zusätzlich kann ein Drucksensor 59 im Inneren der Prüfkammer 23, also außerhalb des Behälters 3 angeordnet sein, um eine Leckage 53 zu detektieren.

### Bezugszeichenliste

- 1: Vorrichtung
- 3: flexibler Behälter
- 5: Wickelkern
- 7: Aufnahmeschicht
- 9: Beabstandungsmittel
- 13: Anschluss bzw. Verbinder
- 15: Fluidleitungsdurchführung
- 17: Rohr
- 19, 19a, 19b: Deckelelemente
- 21: Dichtung
- 23: Prüfkammer
- 25: Antrieb
- 27: Antriebswelle
- 29: Wellenlager
- 31, 31': Zufuhrleitung, Fluidleitung
- 33: Fluidquelle
- 35: Fluidsenke
- 37: Verschiebeeinrichtung
- 39: Lamellen
- 41: Blatt
- 43: Nut
- 45: Seilzug
- 47: Umlenkrollen
- 51, 51': Durchflussmeßeinrichtung
- 53: Leckage
- 55: Fluiddetektor, Gassensor
- 57: Drucksensor
- 59: Drucksensor

## Patentansprüche

1. Verfahren zur Prüfung eines flexiblen Behälters umfassend die Schritte:
- Anordnen des flexiblen Behälters (3) an einen Wickelkern (5), welcher um eine Wickelachse (W) drehbar ist und ein inneres Widerlager (5) ausbildet,
wobei ein Beabstandungsmittel (9), welches als ein aufwickelbares Blatt (41) ausgebildet ist, mit einer Breitenerstreckung (X) parallel zur Wickelachse (W) an dem Wickelkern (5) befestigt ist;
- Aufwickeln des Beabstandungsmittels (9) gemeinsam mit dem flexiblen Behälter (3) um die Wickelachse (W);
- Anordnen eines äußeren Widerlagers (17) um den aufgewickelten Behälter (3)
- Verbinden zumindest einer Behälteröffnung (13) des Behälters (3) mit einer Fluidquelle (33);
- Füllen des Behälters (3) mit einem Fluid aus der Fluidquelle (33), um zu einem ersten Zeitpunkt (T₁) einen vorbestimmten Überdruck (P₁) in dem flexiblen Behälter (3) zu erzeugen;
- Bestimmen, ob der Behälter (3) hinreichend dicht ist.

2. Verfahren nach Anspruch 1, wobei an dem inneren Widerlager (5) und/oder an dem äußeren Widerlager (17) eine zumindest bereichsweise fluiddurchlässige und/oder strukturierte Aufnahmeschicht (7) angeordnet ist und/oder wobei das zwischen den aufgewickelten Lagen des flexiblen Behälters (3) angeordnete Beabstandungsmittel (9) zumindest bereichsweise fluiddurchlässig und/oder strukturiert ist.

3. Verfahren nach Anspruch 1 oder 2, wobei das äußere Widerlager (17) durch ein Wickeln einer weiteren Lage eines Materials um den Wickel mit dem flexiblen Behälter (3) ausgebildet wird.

4. Vorrichtung zur Prüfung eines flexiblen Behälters (3) umfassend:
- einen Wickelkern (5), welcher um eine Wickelachse (W) drehbar ist und ein inneres Widerlager ausbildet,
wobei ein flexibler Behälter (3) an dem Wickelkern (5) befestigbar und um die Wickelachse (W) aufwickelbar ist;
- eine Fluidzufuhr, mit welcher zumindest eine Behälteröffnung (13) des flexiblen Behälters fluidisch verbindbar ist;
- ein äußeres Widerlager (17), welches um den aufgewickelten Behälter (3) anordenbar ist; und
- ein Beabstandungsmittel (9), welches gemeinsam mit dem flexiblen Behälter (3) um die Wickelachse (W) aufwickelbar ist, wobei das Beabstandungsmittel (9) als ein aufwickelbares Blatt (41) ausgebildet ist, welches mit einer Breitenerstreckung (X) parallel zur Wickelachse (W) an dem Wickelkern (5) befestigt ist.

5. Vorrichtung gemäß Anspruch 4, wobei das Blatt (41) zumindest bereichsweise fluiddurchlässig und/oder mit einer strukturierten Oberfläche ausgebildet ist.

6. Vorrichtung gemäß Anspruch 4 oder 5, wobei das Blatt (41) aus einer Vielzahl von gelenkig miteinander verbundenen Lamellen (39) ausgebildet ist.

7. Vorrichtung gemäß Anspruch 6, wobei die Lamellen (39) oder Führungselemente, welche an den entlang der Breitenerstreckung (X) voneinander beabstandeten Enden der Lamellen (39) befestigt sind, in eine zugeordnete Führungsnut (43) eingreifen, um die Lamellen (39) in einem vorbestimmten Abstand zueinander aufzuwickeln.

8. Vorrichtung gemäß einem der Ansprüche 4 bis 7, wobei der Wickelkern (5) mit einem Antrieb (25) verbunden ist.

9. Vorrichtung gemäß einem der Ansprüche 4 bis 8, wobei an dem inneren Widerlager (5) und/oder an dem äußeren Widerlager (17) eine zumindest bereichsweise fluiddurchlässige und/oder strukturierte Aufnahmeschicht (7) angeordnet ist und/oder wobei zwischen den aufgewickelten Lagen des flexiblen Behälters (3) angeordnete Beabstandungsmittel (9) zumindest bereichsweise fluiddurchlässig und/oder strukturiert.

10. Vorrichtung gemäß einem der Ansprüche 4 bis 9, weiter umfassend:
- eine Fluidquelle (33), welche mit der Fluidzufuhr fluidisch verbunden ist und/oder
- eine Prüfeinrichtung, durch welche diskriminierbar ist, ob der Behälter (3) hinreichend dicht ist.

## Claims

1. A method for inspecting a flexible container, comprising the steps of:
- arranging the flexible container (3) on a winding core (5), which is rotatable about a winding axis (W) and forms an inner abutment (5),
wherein a spacer means (9), which is formed as a wound sheet (41), is fixed on the winding core (5) parallel to the winding axis (W) with a width extension (X);
- winding the spacer means (9) about the winding axis (W) together with the flexible container (3);
- arranging an outer abutment (17) around the wound container (3);
- connecting at least a container opening (13) of the container (3) to a fluid source (33);
- filling the container (3) with a fluid from the fluid source (33) to generate a predetermined positive pressure (P₁) in the flexible container (3) at a first time (T₁);
- determining whether the container (3) is sufficiently tight.

2. The method according to claim 1, wherein a receiving layer (7), which is at least partially permeable to fluid and/or structured, is arranged on the inner abutment (5) and/or on the outer abutment (17), and/or wherein the spacer means (9), which is arranged between the wound layers of the flexible container (3), is at least partially permeable to fluid and/or structured.

3. The method according to claim 1 or 2, wherein the outer abutment (17) is formed by winding a further layer of material around the reel with the flexible container (3).

4. A device for inspecting a flexible container (3), comprising:
- a winding core (5), which is rotatable about a winding axis (W) and forms an inner abutment,
wherein a flexible container (3) is fixable to the winding core (5) and windable about the winding axis (W);
- a fluid supply to which at least a container opening (13) of the flexible container is fluidly connectable;
- an outer abutment (17) arrangeable around the wound container (3); and
a spacer means (9) windable about the winding axis (W) together with the flexible container (3), wherein the spacer means (9) is formed as a wound sheet (41), which is fixed on the winding core (5) parallel to the winding axis (W) with a width extension (X);

5. The device according to claim 4, wherein the sheet (41) is formed at least partially permeable to fluid and/or with a structured surface.

6. The device according to claim 4 or 5, wherein the sheet (41) is formed of a plurality of articulated lamella (39).

7. The device according to claim 6, wherein the lamella (39) or guiding elements, which are fixed to the ends of the lamella (39) mutually spaced along the width extension (X), engage an associated guiding groove (43) to wind up the lamella (39) at a predetermined distance.

8. The device according to one of claims 4 to 7, wherein the winding core (5) is connected to a drive (25).

9. The device according to one of claims 4 to 8, wherein a receiving layer (7), which is at least partially permeable to fluid and/or structured, is arranged on the inner abutment (5) and/or on the outer abutment (17), and/or wherein spacer means (9) between the wound layers of the flexible container (3) at least partially permeable to fluid and/or structured.

10. The device according to one of claims 4 to 9, further comprising:
- a fluid source (33) fluidly connected to the fluid supply, and/or
- an inspection device, by which it can be discriminated whether the container (3) is sufficiently tight.

## Revendications

1. Procédé de contrôle d'un récipient flexible, comprenant les étapes consistant à :
- disposer le récipient flexible (3) auprès d'un noyau d'enroulement (5), lequel est rotatif autour d'un axe d'enroulement (W) et qui forme une butée intérieure (5),
sachant qu'un moyen d'écartement (9), qui est réalisé en tant que feuille (41) pouvant être enroulée, avec une étendue en largeur (X) parallèle par rapport à l'axe d'enroulement (W), est fixé auprès du noyau d'enroulement (5) ;
- enrouler le moyen d'écartement (9) en commun avec le récipient flexible (3) autour de l'axe d'enroulement (W) ;
- disposer une butée extérieure (17) autour du récipient (3) enroulé
- raccorder au moins une ouverture de récipient (13) du récipient (3) avec une source de fluide (33) ;
- remplir le récipient (3) avec un fluide sortant de la source de fluide (33), pour créer à un premier moment (T₁) une surpression (P₁) prédéfinie dans le récipient flexible (3) ;
- déterminer si le récipient (3) est suffisamment étanche.

2. Procédé d'après la revendication 1, sachant qu'auprès de la butée intérieure (5) et/ou de la butée extérieure (17) est disposée une couche réceptrice (7) au moins par zones perméable au fluide et/ou structurée et/ou sachant que le moyen d'écartement (9) disposé entre les couches enroulées du récipient flexible (3) est au moins par zones perméable au fluide et/ou structuré.

3. Procédé d'après la revendication 1 ou 2, sachant que la butée extérieure (17) est réalisée par un enroulement d'une couche supplémentaire d'un matériau autour du rouleau avec le récipient flexible (3).

4. Dispositif pour le contrôle d'un récipient flexible (3), comprenant :
- un noyau d'enroulement (5), lequel est rotatif autour d'un axe d'enroulement (W) et qui forme une butée intérieure (5),
sachant qu'un récipient flexible (3) peut être fixé auprès du noyau d'enroulement (5) et peut être enroulée autour de l'axe d'enroulement (W) ;
- une arrivée de fluide, avec laquelle au moins une ouverture de récipient (13) du récipient (3) flexible peut être raccordée de manière fluidique ;
- une butée extérieure (17), laquelle peut être disposée autour du récipient (3) enroulé ; et
- un moyen d'écartement (9), lequel peut être enroulé en commun avec le récipient flexible (3) autour de l'axe d'enroulement (W), sachant que le moyen d'écartement (9) est réalisé sous forme d'une feuille (41) pouvant être enroulée, qui est fixée auprès du noyau d'enroulement (5) avec une étendue en largeur (X) parallèle à l'axe d'enroulement (W).

5. Dispositif d'après la revendication 4, sachant que la feuille (41) est réalisée au moins par zones de manière perméable au fluide et/ou avec une surface structurée.

6. Dispositif d'après la revendication 4 ou 5, sachant que la feuille (41) est réalisée à partir d'une pluralité de lamelles (39) reliées entre elles de manière articulée.

7. Dispositif d'après la revendication 6, sachant que les lamelles (39) ou bien des éléments de guidage, qui sont fixés auprès des extrémités des lamelles (39) écartées l'une de l'autre le long de l'étendue en largeur (X), s'engagent dans une rainure de guidage (43) associée, pour enrouler les lamelles (39) avec un écartement réciproque prédéterminé.

8. Dispositif d'après une des revendications de 4 à 7, sachant que le noyau d'enroulement (5) est raccordé à un moyen d'actionnement (25).

9. Dispositif d'après une des revendications de 4 à 8, sachant qu'auprès de la butée intérieure (5) et/ou auprès de la butée extérieure (17) est disposée une couche réceptrice (7) au moins par zones perméable au fluide et/ou structurée et/ou sachant que les moyens d'écartement (9) disposés entre les couches enroulées du récipient flexible (3) sont au moins par zones perméable au fluide et/ou structuré.

10. Dispositif d'après une des revendications de 4 à 9, comprenant en outre :
- une source de fluide (33), qui est reliée à l'entrée de fluide de manière fluidique et/ou
- un moyen de contrôle, par lequel on peut discriminer si le récipient (3) est suffisamment étanche.
